# EUROPEAN PATENT APPLICATION

(11) **EP 3 605 787 A1**
(43) Date of publication of application: **05.02.2020**
(21) Application number: 17901531.8
(22) Date of filing: 23.03.2017
(51) Int. Cl.: H02J 7/34, H02J 7/32, H02J 9/00

(54) **HYBRID POWER SUPPLY METHOD, DEVICE, AND MICRO-ENERGY POWER SUPPLY BASED ON MICRO-ENERGY COLLECTION**

(71) Applicant: Shenzhen Cooperation Technology Co., Ltd., Shenzhen, Guangdong 518000 (CN)
(72) Inventor: HUA, Jianwu, Shenzhen Guangdong 518000 (CN)
(74) Representative: dompatent von Kreisler Selting Werner - Partnerschaft von Patent- und Rechtsanwälten mbB
(86) International application number: PCT/CN2017/077886
(87) International publication number: WO 2018/170839

(57) **Abstract**

A hybrid power supply method, a device and a micro-energy power supply based on micro-energy collection are provided. The method includes: collecting micro-energy and storing the collected micro-energy in an energy storage unit; awakening or starting a system after the energy storage unit reaches a startup power; turning into a power saving mode after the system is started, and switching to a reserve energy storage unit for power supply; supplying the energy acquired by micro-energy collection to the system for data interaction; and making the system turn into the power saving mode after data transmission is completed, and switch to the reserve energy storage unit for power supply. A hybrid power supply mode is adopted, where the environmental energy collection is a main power supply and the chemical battery is an auxiliary power supply, so as to ensure the all-day operation of the device. The ultra-low-power MCU is used as the control center, supplemented by an execution circuit, which matches and collects a variety of weak environmental energy to provide reliable, all-day power supply for the devices.

## Description

### TECHNICAL FIELD

The present application pertains to the technical field of electronics, in particularly, relates to a hybrid power supply method, a device, and a micro-energy power supply based on micro-energy collection.

### BACKGROUNG

With the development of intellectualization, more and more intelligent sensors, controllers and communication networks are used in various complex environments, and with the increasing awareness of environmental protection, the design scheme of clean energy power supply in the application environment will be prioritized in terms of power supply demand. Especially for some weak power consumption devices such as a wireless sensor, a Bluetooth, a low power consumption wireless actuator, etc., because these applications are small in size and low in power consumption, it is most environmentally friendly that collecting the micro-energy in the environment to supply power.

However, existing low-power communication devices or smart terminals are usually powered by a single clean energy source, such as solar energy, wind energy, fluid energy, etc. Due to the limitations and uncertainties of the application environment, especially for micro-energy in some environments, unstable and unsustainable energy harvesting often occurs, which makes it difficult to ensure the stable operation of smart devices for a whole day when the amount of clean energy collected in the environment is low, thus affecting the continuity, stability and accuracy of the application of the devices. It may further cause immeasurable loss and serious consequences due to power failure of the devices, and greatly reduce the availability of the devices in various environments at the same time.

### TECHNICAL PROBLEM

The object of the embodiments of the present application is to provide a hybrid power supply method based on micro-energy collection, which aims to solve the problem that existing devices use a single environmental energy to supply power, and the problem that the reliability and the continuity of the electrical devices are poor due to unstable environmental energy collection.

### SUMMARY

The embodiments of the present application are implemented through a hybrid power supply method based on micro-energy collection, which includes the following steps of:
collecting micro-energy and storing the collected micro-energy in an energy storage unit;
awakening or starting a system after the energy storage unit reaches a startup power;
turning into a power saving mode after the system is started, and switching to a reserve energy storage unit for power supply;
supplying the energy acquired by micro-energy collection to the system for data interaction; and
making the system turn into the power saving mode after data transmission is completed, and switch to the reserve energy storage unit for power supply.

Another object of the embodiments of the present application is to provide a hybrid power supply device based on micro-energy collection, which includes:
a collection unit, configured to collect micro-energy and store the collected micro-energy in an energy storage unit, wherein the system is awakened or started after the energy storage unit reaches a starting power;
a data interaction unit, configured to awake the system and perform data interaction, and be powered by the energy from the micro-energy collection; and
a power source switching unit, configured to control the system to turn into dormancy after a system is started and data transmission is completed, and switch to a reserve battery for supply power for the dormancy.

Still another object of the embodiments of the present application is to provide a micro-energy power supply including the above-described hybrid power supply device based on micro-energy collection.

### BENEFICIAL EFFECTS

The embodiments of the present application adopts a hybrid power supply mode in which the environmental energy collection is a main power supply and the chemical battery is an auxiliary power supply to ensure the devices working all the time. The ultra-low-power MCU is used as the control center, supplemented by an execution circuit, which matches and collects a variety of weak environmental energy to provide reliable, all-day power supply for the devices.

### BRIEF DESCRIPTION OF DRAWINGS

FIG. 1 is a flow chart of the hybrid power supply method based on micro-energy collection provided by an embodiment of the present application.
FIG. 2 is a flow chart of the step S104 of the hybrid power supply method based on micro-energy collection provided by an embodiment of the present application.
FIG. 3 is a flow chart of the step S202 of the hybrid power supply method based on micro-energy collection provided by an embodiment of the present application.
FIG. 4 is a structure diagram of the hybrid power supply device based on micro-energy collection provided by an embodiment of the present application.
FIG. 5 is a structure diagram of the data interaction unit of the hybrid power supply device based on micro-energy collection provided by an embodiment of the present application.

### DETAILED DESCRIPTION

In order to make the objects, technical solutions and advantages of the present application more clear, the present application will be further described in detail below with reference to the accompanying drawings and embodiments. It should be understood that the specific embodiments described herein are merely illustrative of the application, and are not intended to limit the application. Further, the technical features involved in the various embodiments of the present application described below may be combined with each other as long as they do not conflict with each other.

The embodiments of the present application adopts a hybrid power supply mode in which the environmental energy collection is a main power supply and the chemical battery is an auxiliary power supply to ensure the devices working all the time. The ultra-low-power MCU is used as the control center, supplemented by an execution circuit, which matches and collects a variety of weak environmental energy to provide reliable, all-day power supply for the devices.

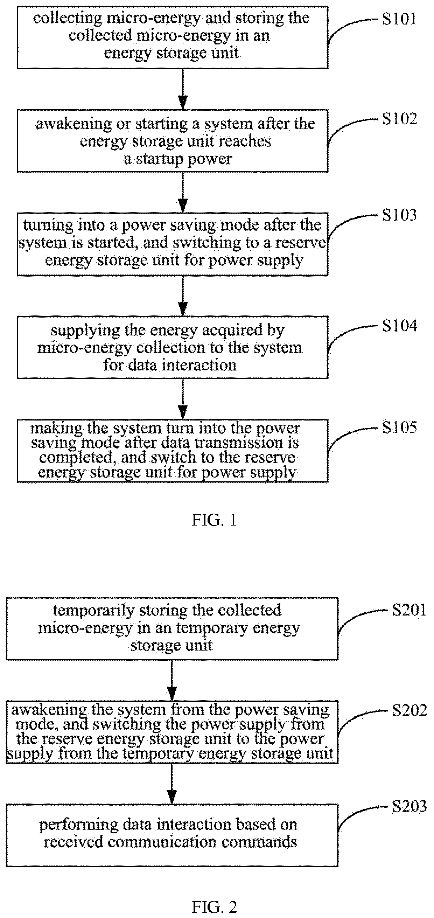

FIG. 1 shows a flow chart of the hybrid power supply method based on micro-energy collection provided by an embodiment of the present application, and only parts related with the present application are shown for convenience of description.

As an embodiment of the present invention, the method can be applied to power supply control of light energy, wind energy, fluid energy, and pressure kinetic energy, and is particularly suitable for switching control of micro-energy power supply of a plurality of micro-amps with low power.

The hybrid power supply method based on micro-energy collection includes the following steps:
step S101, collecting micro-energy and storing the collected micro-energy in an energy storage unit.

In an embodiment of the present application, the collected micro-energy includes: one or more of light energy, wind energy, fluid energy, pressure kinetic energy, temperature difference energy and magnetic energy.

For example, the micro-energy collection can collect only one kind micro-energy, i.e., pressure kinetic energy, and can also collect various micro-energy such as light energy and pressure kinetic energy etc.

In an embodiment of the present application, different energy sources are selected according to different usage environments, and different collection strategies are adopted for different types of energy sources for energy collection. For example, when the light can be guaranteed, the energy may be collected and supplied to the system in a manner of using a solar panel and a power storage device. The devices at outdoor, or a fixed position is provided with light environment for the devices, such as a wireless doorbell etc. Dry batteries and pressure energy collection may be used in mobile devices to ensure both the availability and the maintenance-free performance of the devices.

Specifically, the energy storage unit may be implemented with a capacitor with larger capacity to meet the energy requirements of the system startup.

Further, the step of collecting the micro-energy is specifically includes: selecting a collection mode according to current environment, and performing micro-energy collection according to the collection mode;
where the collection mode includes: a bidirectional alternating current (AC) collection mode and a unidirectional direct current (DC) collection mode.

In an embodiment of the present invention, the bidirectional AC collection mode may be used for the collection of pressure kinetic energy, where the pressure transducing plate converts the pressure kinetic energy into electrical energy. Since the pressure is randomly generated, and is an alternating energy with large dynamic range, high voltage and weak current communication, therefore, it requires fast rectification and energy collection.

The pressure transducing plate converts the generated electric energy into a microprogrammed control unit (MCU) to measure through an IO port. When the value input to the A port is detected to be high and the value input to the B port is low, then a pull-up MOS tube of the A port and a pull-down MOS tube of the B port are quickly turned on, thereby achieving collecting electric energy input forward, such that the energy is transferred to a VCC capacitor (energy storage unit) of the system; when the value input to the B port is detected to be high and the value input to the A port is low, similarly, the pull-up MOS tube of the A port and the pull-down MOS tube of the B port are quickly turned on, such that the reversed electric energy is collected into the VCC of power supply to complete the rectification and bidirectional collection of the AC.

When collecting continuously weak energy, the energy collection system will be cut off when the collected input voltage is lower than an energy threshold that may be collected and utilized, and will be restarted to collect energy when the input voltage is higher than the available threshold.

In an embodiment of the present application, the unidirectional DC collection mode may be used for solar energy collection. Since the solar panel outputs a continuous small current, it is necessary to directly collect energy into the capacitor of the VCC, and a high-interruption switch is required to ensure maximum energy collection without leaking. When the energy in the solar panel is large enough to be utilized (determining whether it can be utilized by means of voltage point discrimination), the MOS tube switch is turned on to collect energy, and when the energy is lower than a preset value, the MOS tube switch is turn off, and the connection between the solar panel and the energy storage unit is cut off so as to avoid energy backflow.

Step S102, awakening or starting the system by the energy storage unit after reaching a startup power;

Preferably, in order to speed up the startup and reduce the startup power consumption, the system may also be started by a ROM or a flash of a chip without loading related programs, and RAM data is stored in a storage device such as FRAM that does not need a maintaining current, so that there is no need for the maintaining current, and the data is transmitted through the Bluetooth or wireless communication protocol by directly absorb the energy generated by the pressure.

Step S103, entering a power saving mode after the system is started, and switching to a reserve energy storage unit for power supply;

As an embodiment of the present application, the power saving mode may be a dormant mode, or a low power consumption mode using a low operating frequency. The reserve energy storage unit may be a dry battery, or an energy storage device such as a capacitor or a rechargeable battery and the like. The energy storage unit and the reserve energy storage unit may also be multiplexed to reduce hardware settings when they both are energy storage devices.

In an embodiment of the present application, in the power saving mode, a 2032 270 maH dry battery, calculated according to a dormant current 1-2UA, can be used for 30 years, thereby the device is free of maintenance.

Step S104: supplying the energy acquired by micro-energy collection to the system for data interaction;

In an embodiment of the present application, a wireless pressure sensor without battery is taken as an example for description, when a vibration occurs, the electrical energy transmitted by collecting the energy pressure is transferred into the capacitor, and when the voltage of the capacitor reaches the power consumption requirement of transmitting data, the data interaction is performed based on communication commands and is powered by the capacitor.

Step S105, making the system enter into the power saving mode after the data transmission is completed, and switch to the reserve energy storage unit for power supply.

In an embodiment of the present application, the power supply switching and the data communication between the various forms of electrical energy respectively adopt independent communication channels, and the data communication may further adopt a watchdog to monitor such that the maximum efficiency and reliable operation of the system are ensured.

The embodiments of the present application adopt a hybrid power supply mode where the environmental energy collection is a main power supply, and the chemical battery is an auxiliary power supply, so as to ensure the all-day operation of the devices. The ultra-low-power MCU is used as the control center, supplemented by an execution circuit, which matches and collects a variety of weak environmental energy to provide reliable, all-day power supply for the devices.

FIG. 2 shows a flow chart of step S104 of the hybrid power supply method based on micro-energy collection provided by an embodiment of the present application, and only parts related with the present application are shown for convenience of description.

Step S104 is specifically as follows:
step S201, temporarily storing the collected micro-energy in an temporary energy storage unit;
step S202, awakening the system from the power saving mode, and switching the power supply from the reserve energy storage unit to the power supply from the temporary energy storage unit; and
step S203, performing data interaction based on the received communication commands.

In step S203, after the communication commands are received, the communication commands are executed until when the temporary energy storage unit has sufficient energy.

In an embodiment of the present application, the energy in the temporary energy storage unit is not stored for a long time, and is utilized when the power supply requirement for performing data interaction is reached.

As an embodiment of the present application, the step of step S202 is specifically as follows:
step S301, pulling up the voltage on the power line through the power of the temporary energy storage unit;
step S302, awakening the system after identifying that the voltage on the power line rises; and
step S303, using the high-potential temporary energy storage unit as the current power supply.

In an embodiment of the present application, two or more power sources are used, which, according to different power source performances, may be sorted as instantaneously collected large electric energy, continuously collected micro-electric energy, and electric energy stored in a dry battery. The instantaneously collected large electric energy is configured to supply power for the data interaction, the continuously collected micro-electric energy and electric energy stored in the dry battery are configured to supply power in the power saving mode.

In the power saving mode, the voltage of the reserve energy storage unit may be converted to a voltage higher than the operation voltage of the system by a low power consumption LDO (low dropout regulator) as the voltage of the power line for power supply.

When another instantaneously collected large electric energy comes in, the LDO will pull up the voltage on the power line, at this time, the processing unit detects the voltage change on the power line after awakening the system through the IO port. Since the voltage of the instantaneously collected large electric energy is higher than the supply voltage of the reserve energy storage unit (dry battery), the power source with high potential difference will replace the dry battery power source to become the main power source for power supply, thus achieving seamlessly switch among the plurality of power sources.

As a preferred embodiment of the present application, the following steps may be included before the step S203:
step S401, receiving and determining a communication level of the communication commands;
when the communication level is high, performing step S402: determining whether the current collected power meets the communication power supply requirement through the voltage on the power line;
performing step S203 if the communication power supply requirement is met;
performing step S403 if the communication power supply requirement is not met: switching to the reserve energy storage unit for power supply, and then performing step S203; and
when the communication level is low, performing step S404: monitoring the voltage change on the power line, and determining the current collected power through the voltage on the power line, and then performing step S203 when the current collected power meets the communication power supply requirement.

In an embodiment of the present application, if the communication level is high, for example, an alarm command, even if there is not enough energy in the current temporary energy storage unit, the power source may be switched to the reserve energy storage unit for power supply, and the communication command may be executed; if the communication level is low, for example, a data transfer command, then it is necessary to wait for enough energy in the temporary energy storage unit before executing the communication command.

The following takes the Bluetooth remote control as an example to illustrate how they work together:

In the Bluetooth remote control without battery, the power generated by a solar panel is used to maintain the operating current of the system in the power saving mode (of course, the solar panel is not necessary, in some wireless systems that do not require standby mode, the collection system is directly waken up by using piezoelectric energy, and then the radio is turned on to transmit data), when the pressure occurs, the energy is converted to DC by the collection unit, the peak voltage is filtered by a small capacitor, and then the power is directly supplied to the Bluetooth chip. After the Bluetooth is awakened, the wireless system is turned on, and the data is transmitted to complete communication.

Since the Bluetooth chip needs to load the entire Bluetooth protocol stack when it starts up, it requires a lot of energy to start it. This energy is large, resulting in that general solar energy, or the power generated by the pressure is not enough to complete the work. Therefore, a rechargeable battery is required as a backup to complete the system startup, that is, the energy is first stored in the rechargeable battery through the solar panel, and the Bluetooth may be turned on when the energy accumulated is enough to start the Bluetooth chip, and then the chip may be started.

It may also be optimized through reducing the loader and permanently storing most programs in the ROM. When starting, it only needs to load a small part of main programs, so that the system may be started up in a very short time, thereby the energy of the startup may be minimized, and the Bluetooth chip may be activated without the reserve energy.

After the chip is started, it turns into dormant mode and operates in a very low power consumption mode, and a small amount of energy can keep a small amount of data in Ram running, usually a current below 1 UA. The data in Ram may also be run in a storage such as FRAM that does not need a holding current, so that no battery is needed.

When the button is pressed down (pressure kinetic energy), the piezoelectric piece is deformed to generate electric energy, and the electric energy awakens the dormant chip. After the chip is started, the electric energy in the piezoelectric piece is used for data interaction, and the timing of the data transmission is determined according to the following method:
scanning the button to determine the position of the button; and
collecting the energy from the piezoelectric piece.

The energy in the piezoelectric piece is rectified into a small capacitor for temporary storage. When the voltage of the capacitor rises to a voltage threshold (3.5V), the chip starts wireless transmission and the data for the button is transmitted. The voltage threshold is selected according to comprehensive calculations such as the area of the piezoelectric piece, the key stroke, the optimal working voltage of the chip, the range of operating voltage, the emission current, the time and capacitance or the like, and then is determined according to the actual situation. When the chip initiates wireless transmission, the button data is transmitted out.

After the data transmission is completed, the system turns into dormancy and waits for the next wakeup.

In an embodiment of the present application, since the power from the pressure button has timeliness, that is, the electric energy of a pushbutton is a peak-type energy distribution, that is, during this process, the time for the wireless transmission most needing electricity should be grasped well, i.e., the transmission is to be started during the ascent, and the wireless signal is to be transmitted at the peak. That is to say, the task with large power consumption is done when the energy is highest, so that the data transmission is completed most effectively. The highest power point is also the most powerful time point. If the transmission time deviates from this time point, the user's experience will be reduced. If the transmission time is advanced, it will feel like that the hand feeling of the button is not good, and during the processes of pressing the button and starting the chip, the piezoelectric piece is equivalently short-circuited due to that all the energy of the piezoelectric piece is suddenly taken away in advance, and a relatively large resistance is directly produced, thereby a large downward pressing force is required, which causes the hand feeling to directly get worse, as if pressing on an iron plate, and results in that the button feels hard. If the transmission time lags, then the power is not enough, and the transmission may fail, which results in no hand feeling of the button, and causes the button relatively soft.

The capacitance of the capacitor is calculated based on the amount of power generated by each pressure and the power consumed by the chip at the optimum operating voltage. For example, the energy required for each transmission is 1 uc, and the optimum operating voltage of the chip is 3.3V. The minimum working voltage is 2.4V According to the range of 3.5V to 2.6V, it is necessary to save the energy to ensure that the chip can initiate normally and run to the time point when the system is ready to transmit. At the time of transmission, the piezoelectric piece and the capacitor supply power to the system, thereby, ensuring the data interaction be completed. The best way herein is that the data communication is powered through the electricity of a piezoelectric transducer, and the reserve energy storage unit serves as a standby or dormant power supply. Because the strength and the speed of pressing the button are always different, so the power generated is different, therefore it will happen many times that the power is not enough to transmit, or too much to damage the chip.

In the embodiments of the present application, the light energy, the pressure energy, the thermal energy and the like can be converted into electric energy through the corresponding transducing device, and then the energy is collected into the capacitor through the energy collecting MCU, or temporarily stored in the energy storage device, meanwhile the wireless device is awakened or turned on, and the system transmits the collected button information or the data acquired by the sensor in a wireless manner to complete the data interaction. The ultra-low-power MCU is used as a processing unit, assisted by an execution circuit, such that the switching control of power sources is performed. Moreover, a variety of weak environmental energies are matched and collected to provide a reliable, all-day power supply for the device.

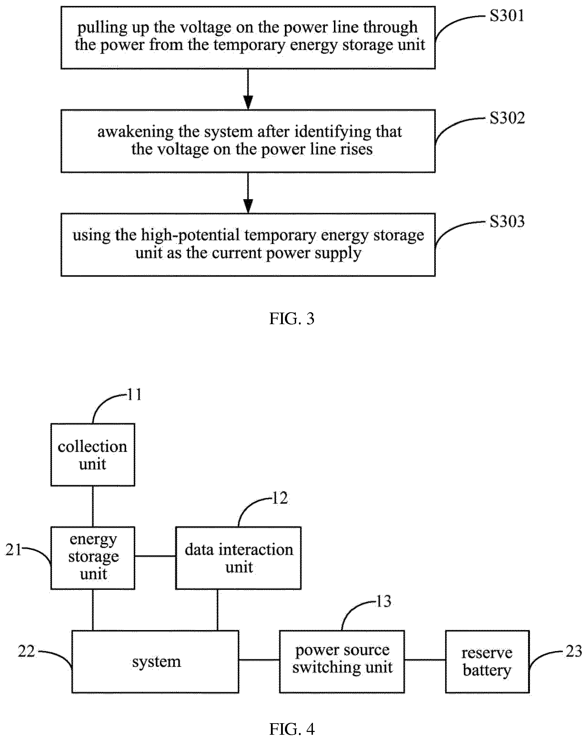

FIG. 4 shows a structure of the hybrid power supply device based on micro-energy collection provided by an embodiment of the present application, and only parts related with the present application are shown for convenience of description.

As an embodiment of the present application, the hybrid power supply device based on micro-energy collection includes:
a collection unit 11 configured to collect micro-energy and store the collected micro-energy in an energy storage unit 21. The energy storage unit 21 awakes or starts a system 22 after reaching a starting power;

In an embodiment of the present application, the micro-energy collection may collect one kind of energy, or a variety of energies.

Preferably, the collection unit 11 includes a collection mode selection unit, which is configured to select a collection mode according to current environment, and perform micro-energy collection according to the collection mode;
where the collection mode includes: a bidirectional alternating current collection mode and a unidirectional direct current collection mode.

In an embodiment of the present invention, the bidirectional AC collection mode may be used for the collection of pressure kinetic energy, where the pressure transducing plate converts the pressure kinetic energy into electrical energy. Since the pressure is randomly generated, and is an alternating energy with large dynamic range, high voltage and weak current communication, therefore, it requires fast rectification and energy collection.

As an embodiment of the present application, the collection unit 11 adopts the bidirectional alternating current collection mode in a pressure environment, and the collection unit 11 includes a pressure transducing plate and a MCU. The pressure transducing plate converts the generated electric energy into the MCU to measure through an IO port. When the value input to the A port is detected to be high and the value input to the B port is low, then a pull-up MOS tube of the A port and a pull-down MOS tube of the B port in the MCU are quickly turned on, thereby achieving collecting electric energy input forward, such that the energy is transferred to a VCC capacitor (energy storage unit) of the system; when the value input to the B port is detected to be high and the value input to the A port is low, similarly, the pull-up MOS tube of the A port and the pull-down MOS tube of the B port are quickly turned on, such that the reversed electric energy is collected into the VCC of power supply to complete the rectification and bidirectional collection of the AC.

When collecting continuously weak energy, the energy collection system will be cut off when the collected input voltage is lower than an energy threshold that may be collected and utilized, and will be restarted to collect energy when the input voltage is higher than the available threshold.

In an embodiment of the present application, the unidirectional DC collection mode may be used for solar energy collection. Since the solar panel outputs a continuous small current, it is necessary to directly collect energy into the capacitor of the VCC, and a high-interruption switch is required to ensure maximum energy collection without leaking. When the energy in the solar panel is large enough to be utilized (determining whether it can be utilized by means of voltage point discrimination), the MOS tube switch in the MCU is turned on to collect energy, and when the energy is lower than a preset value, the MOS tube switch is turn off, and the connection between the solar panel and the energy storage unit is cut off so as to avoid energy backflow.

Of course, the collection unit 11 may also include the pressure transducing plate, the solar panel and the MCU at the same time, and select the bidirectional alternating current collection mode or the unidirectional direct current collection mode according to the current environment.

In order to speed up the startup and reduce the startup energy consumption, a specific main program may be loaded when the system is started, and other programs may be permanently stored in the ROM or Flash.
a data interaction unit 12 configured to awaken the system 22 and perform data interaction. The data interaction unit 12 is powered by the energy collected from the micro-energy;

The wireless pressure sensor without battery is taken as an example for description, when a vibration occurs, the electrical energy transmitted by collecting the energy pressure is transferred into the capacitor, and when the voltage of the capacitor reaches the power consumption requirement of transmitting data, the data interaction is performed based on communication commands and is powered by the capacitor.

In an embodiment of the present application, the power supply switching and the data communication between the various forms of electrical energy respectively adopt independent communication channels, and the data communication may further adopt a watchdog to monitor such that the maximum efficiency and reliable operation of the system are ensured.
a power source switching unit 13 configured to control the system to turn into dormancy after the system 22 is started and after the data transmission is completed, and switch to supply power for the dormancy through a reserve battery 23.

As an embodiment of the present application, the power saving mode may be a dormant mode, or a low-power mode with a low operating frequency. The reserve energy storage unit may be a dry battery, or an energy storage device such as a capacitor or a rechargeable battery. When both the energy storage unit and the reserve energy storage unit serve as energy storage devices, they may be multiplexed to reduce hardware arrangement.

In an embodiment of the present application, in the power saving mode, a 2032 270 maH dry battery, calculated according to a dormant current 1-2UA, can be used for 30 years, thereby the device is free of maintenance.

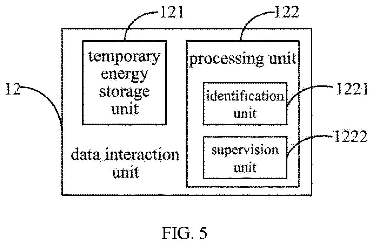

FIG. 5 shows a structure of the data interaction unit of the power source management device based on micro-energy collection according to an embodiment of the present application, and only parts related with the present application are shown for convenience of description.

As an embodiment of the present application, the data interaction unit 12 includes:
a temporary energy storage unit 121 configured to temporarily store the collected micro-energy;

In an embodiment of the present application, the energy in the temporary energy storage unit is not stored for a long time, and is utilized when the power supply requirement for performing data interaction is reached.
a processing unit 122 configured to awaken the system, switch the power supply provided by the reserve battery to the power supply provided by the temporary energy storage unit, identify current commands, and perform data interaction according to the current commands.

In an embodiment of the present application, after the communication commands are received, the communication commands are executed until the temporary energy storage unit has sufficient energy.

When the power source is switched to the dormant state, the voltage of the reserve battery is converted to a voltage higher than the operation voltage of the system by a low power consumption LDO, serving as the voltage of the power line, so as to provide dormant power supply.

The temporary energy storage unit raises the voltage on the power line, and the processing unit wakes up the system after recognizing that the voltage on the power line has raised, and the temporary energy storage unit with high potential is used as the current power supply.

Further, the processing unit 122 includes:
an identification unit 1221 configured to identify the current commands;
a supervision unit 1222 configured to monitor the voltage change on the power line, and determine the current collected power through the voltage on the power line, and then perform data interaction according to the current commands when the current collected power meets the communication power supply requirement.

In an embodiment of the present application, two or more power sources are used, which, according to different power source performances, may be sorted as instantaneously collected large electric energy, continuously collected micro-electric energy, and electric energy stored in a dry battery. The instantaneously collected large electric energy is configured to supply power for the data interaction, the continuously collected micro-electric energy and electric energy stored in the dry battery are configured to supply power in the power saving mode.

In the power saving mode, the voltage of the reserve energy storage unit may be converted to a voltage higher than the operation voltage of the system by a low power consumption LDO (low dropout regulator) as the voltage of the power line for power supply.

When another instantaneously collected large electric energy comes in, the LDO will pull up the voltage on the power line, at this time, the processing unit detects the voltage change on the power line after awakening the system through the IO port. Since the voltage of the instantaneously collected large electric energy is higher than the supply voltage of the reserve energy storage unit (dry battery), the power source with high potential difference will replace the dry battery power source to become the main power source for power supply, thus achieving seamlessly switch among the plurality of power sources.

As a preferred embodiment of the present application, the processing unit 122 may further include a communication command determining unit configured to determine the communication level of the communication commands before performing data interaction according to the received communication commands. When the communication level is high, it is determined whether the current collected power meets the communication power supply requirement through the voltage on the power line; if the requirement is met, the data interaction is performed; if the requirement is not met, the the reserve energy storage unit is selected for power supply, and then the data interaction is performed;
when the communication level is low, the voltage change on the power line is monitored, and the current collected power is determined through the voltage on the power line, and when the current collected power meets the communication power supply requirement, the data interaction is performed.

In an embodiment of the present application, if the communication level is high, for example, an alarm command, even if there is not enough energy in the current temporary energy storage unit, the power source may be switched to the reserve energy storage unit for power supply, and the communication command may be executed; if the communication level is low, for example, a data transfer command, then it is necessary to wait for enough energy in the temporary energy storage unit before executing the communication commands.

Another object of embodiments of the present application is to provide a micro-energy power supply including the above-described power source management device based on micro-energy collection.

The embodiments of the present application adopt a hybrid power supply mode where the environmental energy collection is a main power supply, and the chemical battery is an auxiliary power supply, so as to ensure the all-day operation of the devices. The ultra-low-power MCU is used as the control center, supplemented by an execution circuit, which matches and collects a variety of weak environmental energy to provide reliable, all-day power supply for the devices.

The above description are only preferred embodiments of the present application, which are not intended to limit the present application. Any modification, equivalent, and improvement made within the spirit and principle of the present application should be included in the scope of the present application.

## Claims

1. A hybrid power supply method based on micro-energy collection, comprising the following steps of:
collecting micro-energy and storing the collected micro-energy in an energy storage unit;
awakening or starting a system after the energy storage unit reaches a startup power;
turning into a power saving mode after the system is started, and switching to a reserve energy storage unit for power supply;
supplying the energy acquired by micro-energy collection to the system for data interaction; and
making the system turn into the power saving mode after data transmission is completed, and switch to the reserve energy storage unit for power supply.

2. The method of claim 1, wherein the micro-energy collection comprises collecting one or more micro-energies.

3. The method of claim 1, wherein the step of collecting the micro-energy specifically comprises: selecting a collection mode according to current environment, and performing micro-energy collection according to the collection mode;
wherein the collection mode comprises: a bidirectional alternating current collection mode and an unidirectional direct current collection mode.

4. The method of claim 1, wherein the step of supplying the energy acquired by micro-energy collection to the system for data interaction specifically comprises:
temporarily storing the collected micro-energy in an temporary energy storage unit;
awakening the system from the power saving mode, and switching the power supply from the reserve energy storage unit to the power supply from the temporary energy storage unit; and
performing data interaction based on received communication commands.

5. The method of claim 4, wherein under the power saving mode, the voltage of the reserve energy storage unit is converted to a voltage higher than the operation voltage of the system by a low power consumption LDO, so as to serve as the voltage of a power line for power supply;
wherein the step of awakening the system from the power saving mode and switching the power supply from the reserve energy storage unit specifically comprises:
pulling up the voltage on the power line through the power from the temporary energy storage unit;
awakening the system after identifying that the voltage on the power line rises; and
using the high-potential temporary energy storage unit as the current power supply.

6. The method of claim 4, wherein before the step of performing data interaction based on received communication commands, the method further comprises the following steps of:
receiving communication commands and determining the communication level of the communication commands;
determining whether the current collected power meets communication power supply requirement through the voltage on the power line when the communication level is high;
implementing the step of performing data interaction based on the received communication commands if the communication power supply requirement is met;
switching to the reserve energy storage unit for power supply and implementing the step of performing data interaction based on the received communication commands if the communication power supply requirement is not met; and
monitoring the voltage change on the power line and determining the current collected power through the voltage on the power line when the communication level is low, and implementing the step of performing data interaction based on the received communication commands when the current collected power meets the communication power supply requirement.

7. A hybrid power supply device based on micro-energy collection, comprising:
a collection unit, configured to collect micro-energy and store the collected micro-energy in an energy storage unit, wherein the system is awakened or started after the energy storage unit reaches a starting power;
a data interaction unit, configured to awake the system and perform data interaction, and be powered by the energy from the micro-energy collection; and
a power source switching unit, configured to control the system to turn into dormancy after a system is started and data transmission is completed, and switch to a reserve battery for supply power for the dormancy.

8. The device of claim 1, wherein the micro-energy collection comprises collecting one or more micro-energies.

9. The device of claim 1, wherein the collection unit comprises a collection mode selection unit configured to select a collection mode according to current environment, and perform micro-energy collection according to the collection mode;
wherein the collection mode comprises: a bidirectional alternating current collection mode and an unidirectional direct current collection mode.

10. The device of claim 1, wherein a specific main program is loaded when the system is started, and other programs are permanently stored in a ROM or Flash.

11. The device of claim 1, wherein the data interaction unit comprises:
a temporary energy storage unit, configured to temporarily store the collected micro-energy; and
a processing unit, configured to awaken the system, switch the power supply from the reserve battery to the power supply from the temporary energy storage unit, identify current commands, and perform data interaction according to the current commands.

12. The device of claim 11, wherein when the power source is switched to a dormant state, the voltage of the reserve battery is converted to a voltage higher than the operation voltage of the system by a low power consumption LDO, so as to serve as voltage of a power line to provide dormant power supply;
wherein the temporary energy storage unit raises the voltage on the power line, the system is awakened after the processing unit recognizes that the voltage on the power line has raised, and the temporary energy storage unit with high potential is used as the current power supply.

13. The device of claim 11, wherein the processing unit comprises:
an identification unit, configured to identify the current commands; and
a supervision unit, configured to monitor the voltage change on the power line, and determine the current collected power through the voltage on the power line, and then perform data interaction according to the current commands when the current collected power meets communication power supply requirement.

14. A micro-energy power supply, comprising the hybrid power supply device based on micro-energy collection of any one of claims 7-13.
